(19) Europäisches Patentamt
European Patent Office
Office européen des brevets

(11) Veröffentlichungsnummer: **0 384 163 A2**

(12) # EUROPÄISCHE PATENTANMELDUNG

(21) Anmeldenummer: **90101674.1**

(51) Int. Cl.5: **C09J 177/02, C08G 69/40**

(22) Anmeldetag: **28.01.90**

(30) Priorität: **11.02.89 DE 3904155**
**21.03.89 DE 3909215**

(43) Veröffentlichungstag der Anmeldung:
**29.08.90 Patentblatt 90/35**

(84) Benannte Vertragsstaaten:
**DE FR GB IT**

(71) Anmelder: **BAYER AG**

**D-5090 Leverkusen 1 Bayerwerk(DE)**

(72) Erfinder: **Heinz, Hans-Detlef, Dr.**
**Breslauer Strasse 31**
**D-4150 Krefeld 11(DE)**
Erfinder: **Hänsel, Eduard, Dr.**
**Espenstrasse 2**
**D-5600 Wuppertal(DE)**
Erfinder: **Meyer, Rolf-Volker, Dr.**
**Buchheimer Strasse 23**
**D-4150 Krefeld(DE)**
Erfinder: **Arend, Günter, Dr.**
**Claudiusstrasse 42**
**D-4047 Dormagen 1(DE)**

(54) **Polyetheramid-Schmelzklebstoffe.**

(57) Gegenstand der Erfindung sind modifizierte Polyetheramid-Schmelzklebstoffe mit verringerter Schmelzviskosität und gegebenenfalls besseren Klebeeigenschaften und ihre Verwendung als Schmelzklebrohstoffe.

EP 0 384 163 A2

## Polyetheramid-Schmelzklebstoffe

Gegenstand der Erfindung sind modifizierte Polyetheramid-Schmelzklebstoffe mit verringerter Schmelzviskosität und gegebenenfalls besseren Klebeeigenschaften und ihre Verwendung als Schmelzklebrohstoffe.

Verklebungen werden meist mit Hilfe von lösungsmittelhaltigen Klebern oder mit sogenannten Polymerisationsklebern durchgeführt. In beiden Fällen ist eine gewisse "offene" Zeit zur Abdunstung des Lösungsmittels bzw. der Polymerisation erforderlich, bis die Verklebung ihre volle Stärke erreicht hat.

Moderne zeitsparende Arbeitstechniken erfordern eine möglichst kurze Abbindezeit der Klebung, die durch den Einsatz von Schmelzklebestoffen in vielen Fällen erreicht werden kann.

Als Schmelzkleber geeignet sind z.B. thermoplastische Kunststoffe verschiedener Art, z.B. Ethylen-Vinyl acetat-Copolymere mit ca. 30 Gew.-% Vinylacetat, Polyester und auch Copolyamide, die je nach dem gewünschten Einsatzgebiet ausgewählt und in Form von Pulvern, Pasten oder Schmelzen auf die zu verklebenden Gegenstände und Materialien aufgebracht werden.

Zur Verklebung von Textilien werden vorzugsweise pulverförmige Schmelzklebstoffe aufgebracht, die durch Heißpressen oder durch einen Bügelvorgang die Verklebung bewirken.

In der Schuhindustrie werden, insbesondere zum Spitzen-und Fersenzwicken, die dafür verwendeten Schmelzklebstoffe als Schmelze aufgebracht, die beim Abkühlen einer kurzzeitigen Druckbelastung unterworfen wird und eine sofortige, dauerhafte Verklebung bewirken muß.

Für diesen Einsatzbereich werden vorzugsweise Schmelzklebestoffe auf Basis von thermoplastischen Polyestern und Polyamidharzen verwendet.

Die prinzipiell geeigneten Produkte auf Polyesterbasis haben allgemein den Nachteil, daß sie bei Temperaturen über 200 °C verarbeitet werden müssen und zudem eine nur wenig elastische Verklebung ermöglichen, die unter Knickbelastung leicht brechen kann.

Bei Schmelzklebstoffen auf Polyamidbasis unterscheidet man vor allem zwei große Klassen, nämlich die auf Basis dimerer Fettsäuren und dimerfettsäurefreie Produkte.

Die Polyamide auf Basis dimerisierter Fettsäuren haben üblicherweise nur dann gute Eigenschaften, wenn der Dimerengehalt größer als 90 %, insbesondere größer als 95 % ist und die Verunreinigungen an Monomer- und Trimerfettsäuren in definierten Mengen vorliegen (OS 1 520 933; DE-AS 1 594 008).

So verursacht ein zu hoher Gehalt an Trimerfettsäuren leicht eine zu hohe Schmelzviskosität bzw. sogar Gelierung, ein zu hoher Gehalt an Monomerfettsäuren dagegen Produkte, die spröde und unbiegsam sind.

Ein weiterer Nachteil dieser Polyamidharze ist die Tatsache, daß sie bei den erforderlichen Verarbeitungstemperaturen von bis zu 200 °C im Kontakt mit Luft zu Viskositätserhöhung und zum Nachdunkeln neigen (Coating, 8, 218, 1971)

Produkte auf Basis gehärteter Dimerfettsäuren weisen diese Nachteile zwar nicht auf, jedoch kommt zusätzlich zur Anreicherung des Dimeren noch die Hydrierung als Schritt dazu, so daß solche hydrierten Dimerfettsäuren vergleichsweise teuer sind.

Hier bieten Produkte auf Basis von Lactamen prinzipiell Vorteile, da sie großtechnisch zugänglich sind (z.B. Caprolactam) und keine Doppelbindungen enthaltend. Nachteilig ist hier, daß Produkte auf Basis Caprolactam hohe Schmelzviskositäten und Aufschmelzzeiten zeigen, so daß trotz hoher Klebefestigkeiten die Verarbeitbarkeit meist sehr erschwert ist.

In der DE-OS 2 542 467 werden Polyesteramide aus Lactamen, primären Diaminen, mehrwertigen Alkoholen mit 2 -12 C-Atomen und Dicarbonsäuren beschrieben, die als Schmelzkleber verwendet werden können, jedoch meist für eine Verarbeitung aus der Schmelze zu hohe Erweichungspunkte haben bzw. auch zu wenig elastisch sind.

Im allgemeinen genügen lediglich aus Laurinlactam als Hauptkomponente unter Mitverwendung von Dodecandicarbonsäure oder Dodecandiol hergestellte Produkte bezüglich Elastizität und Verarbeitbarkeit höheren Anforderungen. Nachteilig ist neben der schwierigen Zugänglichkeit dieser Ausgangsprodukte insbesondere das zweistufige Herstellungsverfahren für diese Polyesteramide, wobei in der ersten Stufe unter Druck und in der 2. Stufe unter Vakuum gearbeitet werden muß.

Aus der DDR-Patentschrift 87 888 sind aus Caprolactam, $C_6$-$C_{12}$-Dicarbonsäuren und bestimmten Oligoetheralkoholen hergestellte Polyesteramide als wanderungsbeständige Weichmacher für Polyamide bekannt Als Schmelzkleber sind diese meist pastenförmigen Produkte jedoch offensichtlich nicht geeignet.

Aus der EP 0 017 112 sind Polyetheresteramide mit Caprolactam als Hauptkomponente bekannt, die zwar gute klebetechnische Eigenschaften, jedoch auch hohe Schmelzviskositäten aufweisen, welche anwendungstechnische Nachteile bedingen.

Eine niedrige Schmelzviskosität bei zugleich hoher Festigkeit und gutem Wärmestand sind im Grunde zwar technisch widersprüchliche Anforderungen, doch wäre eine einfache Möglichkeit, die Schmelzviskositäten von Schmelzklebern auf Caprolactam-Basis unter Beibehaltung der guten klebtechnischen Eigenschaften signifikant zu senken, von großem technischen Interesse, da dann eine ganze Gattung hochfester Schmelzklebestoffe breitere Verwendung finden könnte.

Überraschend wurde nun gefunden, daß diese technisch im Grunde widersprüchliche Anforderung für spezielle Polyetheramid-Schmelzklebstoffs auf einfache Weise realisiert werden kann, wenn den Ausgangstoffen Kettenabbrecher bestimmter Strukturmerkmale zugegeben werden und anschließend in üblicher Weise polykondensiert wird.

Es ist selbstverständlich bekannt, die Molekulargewichte von Polykondensaten durch Nichtäquivalenz der funktionellen Gruppen bzw. Verwendung monofunktioneller Verbindungen zu steuern. Überraschend war aber, daß die schmelzviskosität bei vorgegebener molarer Menge des monofunktionellen Kettenabbrechers stark von der Natur desselben abhängt.

Dieser Befund ist umso überraschender, als bei Polyamiden normalerweise die Natur der Endgruppe aufgrund ihrer nur geringen Konzentration in den Polymerketten keine signifikante Rolle spielt.

Weiterhin war es überraschend, daß durch diese Maßnahme bei gegenüber herkömmlichen Kettenabbrechern annähernd unverändertem Molekulargewicht nicht nur die Schmelzviskosität deutlich gesenkt werden kann, sondern auch klebtechnische Eigenschaften wie z.B. Zugfestigkeit oder Abbindeverhalten verbessert sein können.

Gegenstand der Erfindung sind daher Polyetheramid (PEA)-Schmelzklebstoffe, die spezielle Polyetherdiole und mindestens 40 Gew.-% Caprolactam ($\epsilon$-Aminocapronsäure) sowie weitere polyamidbildende Komponenten eingebaut enthalten, dadurch gekennzeichnet, daß bei der Herstellung 0,1 bis 4,0 Mol.-%, bezogen auf die Gesamtmolzahl polyetheramidbildender Komponenten, Kettenabbrecher der allgemeinen Formel (I),

R - Y (I)

wobei

R einen gegebenenfalls verzweigten, gesättigten oder ungesättigten, gegebenenfalls substituierten Alkylrest mit einer Länge von ca. 12 bis ca. 40 C-Atomen und

Y eine gegenüber Lactamen und/oder Carbonsäuren und/oder Alkoholen sowie gegebenenfalls und/oder Aminen reaktive Gruppe

bedeuten,

eingesetzt werden.

Weiterhin ist die Verwendung der erfindungsgemäßen Polyetheramide, gegebenenfalls in Kombination mit anderen Stoffen, als Schmelzkebstoffe sowie als Additive für Thermoplaste Gegenstand der Erfindung.

Beispiele für die Gruppe Y in Formel (I) sind die Gruppen (II)-(III),

$-NH_2$ (II)

-COOH (III)

welche gleichzeitig auch die bevorzugten Gruppen Y darstellen. Besonders bevorzugt ist die Gruppe (III).

Beispiele für spezifische Verbindungen der Formel (I) sind Stearylamin, Stearinsäure, Behenylamin, Behensäure, Hexadecylamin, Hexadecansäure, Hexacosansäure und Octacosansäure.

Bevorzugte Verbindungen der Formel (I) haben gesättigte Alkylreste mit ca. 16 bis ca. 35 C-Atomen.

Besonders bevorzugte Verbindungen der Formel (I) sind Stearinsäure, Stearylamin, Behensäure, Behenylamin, Hexadecylamin und Hexadecansäure.

Die Verbindungen der Formel (I) können einzeln oder in einem beliebigen Gemisch zugegeben werden. Sie sind im Reaktionsgemisch zu 0,1 - 4,0, bevorzugt 0,2 - 3,5 und besonders bevorzugt 0,5 - 3,0 Mol%, bezogen auf den Gesamtmolgehalt an polyetheramidbildenden Komponenten, enthalten.

Die Kettenabbrecher der Formel (I) sind prinzipiell bekannte Verbindungen oder können prinzipiell nach bekannten Verfahren hergestellt werden.

Die erfindungsgemäßen Polyetheramide werden durch Polykondensation von Reaktionsgemischen, die neben den Kettenabbrechern R-Y (I)

1) 40 - 75 Gew.-% Aminocapronsäure-Einheiten abgeleitet z.B. vom Caprolactam und/oder der Aminocapronsäure,

2) 25 - 60 Gew.-% eines Gemisches, in dem angegebenen Äquivalentverhältnis, aus

a) 0,95 bis 1,05 Äquivalenten, bevorzugt 1 Äquivalent einer oder mehrerer aliphatischer und/oder aromatischer $C_4$-$C_{38}$-Dicarbonsäuren, z.B. Adipinsäure, Azelainsäure, Isophthalsäure, Terephtalsäure, Sebazinsäure und dimerisierte Fettsäuren (wobei erfindungsgemäß bevorzugte Polyetheramide keine Dimerfettsäuren enthalten),

b) 0,2 - 0,9 Äquivalenten eines oder mehrerer aliphatischer und/oder cycloaliphatischer $C_6$-$C_{25}$-Diamine, vorzugsweise z.B. Hexamethylendiamin, Trimethylhexamethylendiamine, Isophorondiamin und Zweikerndiamine der Formel (V),

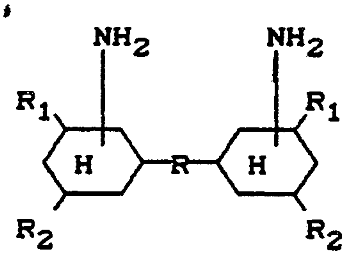

(V)

in der R z.B. ein Alkylen- oder Alkylidenrest mit 1 bis 10 C-Atomen und vorzugsweise ein $-CH_2$-Rest oder ein

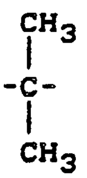

Rest ist und

$R_1$ und $R_2$ gleich oder verschieden sind und H oder $C_1$-$C_3$-Alkyl bedeuten, z.B. 4,4′-Diamino-3,3′-dimethyl-dicyclohexylmethan, 4,4′-Diamino-3,3′, 5,5′-tetramethyl-dicyclohexylmethan, 4,4′-Diamino-dicyclohexylpropan und vorzugsweise 4,4′-Diamino-dicylcohexylmethan und Diaminodicylohexylmethan-Isomerengemische, die zu mindestens 75 % aus dem 4,4′-Isomeren bestehen,

c) 0,1 - 0,8 Äquivalenten eines oder mehrerer Polyoxyalkylendiole, z.B. Polyoxyethylendiole, Polyoxypropylendiole oder Ethylenoxid-Propylenoxid-Copolymer-Diole mit Molekulargewichten ( $\overline{M}_n$) von 200 - 1.000 g $mol^{-1}$, wobei die OH-Endgruppen ganz oder teilweise durch primäre Amin-Endguppen ersetzt sein können, sowie gegebenenfalls

3) 0 bis 15 Gew.-%, bezogen auf die Summe von 1) + 2), Lactame und/oder Aminocarbonsäuren ungleich Caprolactam bzw Aminocapronsäure, z.B. Laurinlactam und Aminoundekansäure, enthalten, hergestellt.

Die Summe der Äquivalente b) und c) beträgt =1.

Werden Dimerfettsäuren gemäß 2a) mitverwendet, so sollen sie mindestens 95 Gew.-% dimere Fettsäuren enthalten. Dimerfettsäuren gemäß 2a) sowie Aminoundecansäure bzw. Laurinlactam gemäß 2c) sollen zu maximal 15 Gew.-% in den Polyetheramiden (PEA) enthalten sein. Bevorzugte Polyetheramide enthalten jedoch weder Dimerfettsäuren noch Aminoundekansäure noch Laurinlactam.

Bevorzugte Polyetheramide werden hergestellt aus

1) 40 - 75 Gew.-% Caprolactam (+ gegebenenfalls geringe Mengen Aminocapronsäure)

2) 25 - 60 Gew.-% eines Gemisches a) bis c) in den angegebenen Äquivalentverhältnissen, von

a) 0,95 bis 1,05 Äquivalenten, bevorzugt 1 Äquivalent, einer Dicarbonsäure, ausgewählt aus Adipinsäure und/oder Sebazinsäure und/oder Isophthalsäure und/oder Terephthalsäure,

b) 0,5 - 0,9 Äquivalenten Hexamethylendiamin und/oder 4,4′-Diaminodicyclohexylmethan (bzw. an oben charakterisierten Isomerengemischen, die auch noch bis zu 10 Gew.-% höher kondensierte Anteile, z.B. Triamine, enthalten können,

c) 0,1 - 0,5 Äquivalenten Polyoxyalkylendiolen mit einem Molekulargewicht ( $\overline{M}_n$) von 300 -600 g $mol^{-1}$, wobei die Summe der Äquivalente b) + c) gleich 1 ist,

3) ohne Mitverwendung von Dimerfettsäuren, Laurinlactam oder Aminoundecansäure,

4) unter Mitverwendung von 0,2 - 3,5 Mol.-%, bezogen auf die Summe der Mole an eingesetzten polyetheramidbildenden Komponenten von 1) - 3), an Monoaminen und/oder Monocarbonsäuren R-Y als Kettenabbrecher, mit einem Kohlenstoffrest R von 16 - 35 C-Atomen gemäß Formel (I).

Die bevorzugten Polyetheramide sind somit, genauer bezeichnet, Polyetheresteramide, welche aber unter dem Namen Polyetheramid (PEA) in der Anmeldung kurzcharakterisiert werden.

Die erfindungsgemäßen Produkte haben Säurezahlen von 4 -20, vorzugsweise von 4- 14, und relative Viskositäten (1 gew.%ige Lösung in m-Kresol bei 25° C) von 1,3-2,5, vorzugsweise von 1,3-2,0. Ihr Erweichungspunkt (Ring und Ball) liegt im allgemeinen bei 100 bis 200° C, vorzugsweise bei 135 bis 190° C, ihre Schmelzviskosität beträgt bei 200° C 0,5 bis 100 Pas, vorzugsweise 1 bis 50 Pas.

Erfindungsgegenstand sind auch die Polyetheramide, erhalten nach dem erfindungsgemäßen Verfahren. Die erfindungsgemäßen Produkte können auch als Klebstoffabmischungen mit anderen Klebstoffkomponenten, Hilfsmitteln, oder auch als Zusatz zu Thermoplasten Verwendung finden.

Die Herstellung der erfindungsgemäßen Polyetheramide kann in an sich bekannter Weise, gegebenenfalls unter Mitverwendung üblicher Katalysatoren, z. B. in Autoklaven oder Kesseln oder auch kontinuierlich durch Kondensation der Ausgangskomponenten, erfolgen. Das Monomergemisch wird dazu, gegebenenfalls unter Druck, allmählich auf 200 -300 °C, vorzugsweise auf 220 - 280 °C, aufgeheizt und in diesem Temperaturbereich unter Stickstoffatmosphäre bis zum Erreichen des gewünschten Molgewichts polykondensiert. Der Fortgang der Reaktion kann durch Bestimmung der Säurezahl leicht verfolgt werden. Nach beendeter Polykondensation wird die Polymerschmelze, je nach Produktzusammensetzung, auf 120 -220 °C abgekühlt, aus dem Autoklaven mittels Stickstoffüberdruck als Band oder als Strang ausgepreßt und in geeigneter Weise zerkleinert, z.B. zerhackt, geschnitten oder granuliert.

Das erhaltene Produkt kann durch Extraktion mit Wasser von z. B. nicht umgesetztem Caprolactam befreit werden, ohne daß die gute Elastizität der Polyetheramide beeinträchtigt wird. Zusätzlich zeichnen sich die durch Extraktion des monomeren Caprolactams erhältlichen Produkte durch erhöhte Viskositätsstabilität und i. a. nochmals verkürzte Abbindezeit aus.

Die mit den erfindungsgemäß einzusetzenden Kettenabbrechern hergestellten Polyetheramide weisen gegenüber mit gleichen molaren Mengen üblicher Kettenabbrecher wie z.B. Benzoesäure hergestellten Produkten nicht nur eine deutlich veringerte Schmelzviskosität, sondern häufig auch zusätzlich verbesserte Werte für z. B. die Zugfestigkeit oder die Abbindezeit auf (siehe Vergleichsversuche).

Sie können daher gegenüber beispielsweise mit Benzoesäure geregelten Typen gegebenenfalls auch den weiteren Vorteil aufweisen, daß auf eine Extraktion des gleichgewichtsbedingten Caprolactam- und Oligomeren-Gehaltes sowie anderer Stoffe verzichtet werden kann, ohne daß eine Erhöhung der Abbindezeit hingenommen werden muß.

Die erfindungsgemäßen Polyetheramide können daher also gegebenenfalls gegenüber mit üblichen Kettenabbrechern hergestellten Produkten auch eine kostengünstigere Herstellung aufgrund des Fortfalls des Extraktionsschrittes aufweisen.

Die erfindungsgemäßen Produkte können weitere Zusatzstoffe, gegebenenfalls in Form von Konzentraten in Polymeren, enthalten, wie z.B. Pigmente, Mattierungsmittel, nukleierende Zusätze, Stabilisatoren, Elastomermodifikatoren, sowie Fließhilfen. Diese Zusatzstoffe können je nach Art vor, während oder nach der Polykondensation eingearbeitet werden.

Die erfindungsgemäßen Polyetheramide können als Additive für andere Thermoplaste Verwendung finden; sie sind jedoch besonders als hochwertige Schmelzkleberohstoffe, vorzugsweise für die Schuhindustrie, geeignet. Dabei sollen sie bei Anwendung als Schmelzklebstoffe bevorzugt Schmelzviskositäten von weniger als 25 Pas bei 220 °C aufweisen.

Die Erfindung ist nachstehend anhand von Beispielen näher erläutert. Die angegebenen Teile und Prozentsätze beziehen sich, sofern anders nicht angegeben, auf das Gewicht.

Vergleichsbeispiel 1 (nicht erfindungsgemäß)

In einem 2 l-Dreihalskolben mit Innenthermometer, Rührer und Destillationsbrücke wurde ein Gemisch aus 900 g Caprolactam, 228 g 4,4′-Diaminodicyclohexylmethan, 260 g Polyoxyethylenglykol *) 400, 252 g Adipinsäure und 10 g Benzosäure vorgelegt, nach Inertisierung unter $N_2$ sofort auf 160 °C aufgeheizt und in weiteren 2 h auf 200 °C aufgeheizt. Bei dieser Temperatur wurde 2 h lang gehalten, anschließend in weiteren 5 h auf 250 °C aufgeheizt und 8 h bei dieser Temperatur gerührt, bis die gewünschte Säurezahl erreicht war. Das Produkt wurde auf eine Aluminium-Schale gegossen, nach Erkalten gehäckselt und mit Wasser bei Raumtemperatur extrahiert.

Die analytischen Daten des Produktes sind in Tabelle 1 enthalten.

Beispiele 1 - 5 (erfindungsgemäß)

In der für das Vergleichsbeispiel 1 beschriebenen Weise wurden Polyetheramide anstatt durch Regelung mit Benzoesäure durch Regelung mit verschiedenen langkettigen Aminen und Carbonsäuren herge-

*) Polyoxyalkylendiole oder Polyalkylenoxid-diole, (bisweilen auch als z.B. Polyalkylenglykole bezeichnet), werden durch Umsetzung von Alkylenoxiden (wie Ethylenoxid oder Propylenoxid) mit bifunktionellen Startern (Wasser oder Diole) nach altbekannten Methoden hergestellt.

stellt. Die analytischen Daten aller Polyetheramide sind in Tabelle 1 zusammengestellt.

Tabelle 1

| Beispiel | Kettenabbrecher (Mol%) | Fp. | SZ (Säurezahl) | $\eta_{rel}$ |
|---|---|---|---|---|
| Vgl. 1 | 0,71 Benzoesäure | 160 | 6 | 1,6 |
| 1 | 0,74 Stearylamin | 150 | 6,7 | 1,55 |
| 2[1)] | 0,74 Stearylamin | 140 | 5,6 | 1,5 |
| 3 | 0,73 Behenylamin[2)] | 145-150 | 9,0 | 1,6 |
| 4[3)] | 0,70 Stearinsäure | 140-145 | 12,0 | 1,4 |
| 5[4)] | 2,88 Stearylamin | 150 | 6,7 | 1,45 |

[1)] Produkt nicht extrahiert
[2)] Jafamin P-Hal 20/22; Jahres Fabrikker A.S., Norwegen
[3)] Auf 248 g verringerte Menge Adipinsäure
[4)] Auf 210 g verringerte Menge 4,4'-Diaminodicyclohexylmethan

Klebetechnische Eigenschaften

An klebetechnischen Eigenschaften werden in Tabelle 2 die Zugfestigkeit, die Zugscherfestigkeit, das Abbindeverhalten sowie die Schmelzviskosität angegeben.

Prüfverfahren

1. Schmelzviskosität (in Anlehnung an DIN 53019)

Ein indirekt beheiztes Reagenzglanz von ca. 30 mm Durchmesser wird zu ca. 3/4 Höhe mit dem Prüfmaterial gefüllt. Man mißt die Viskosität der Schmelze mit einem Brookfield-Viskosimeter RVT, Spindel 7 bei 10 Upm. Von der Anfangstemperatur ausgehend wird in 10° C-Intervallen steigend gemessen.

2. Zugfestigkeit

Zur Bestimmung der Zugfestigkeit werden aus dem Prüfmaterial Normstäbe S-2 hergestellt und nach DIN 53 504 geprüft. Aus jeweils 6 Proben werden Mittelwerte in N/mm$^2$ ermittelt.

3. Abbindeverhalten

Diese Prüfung wird auf Nora-Testgummi Duranit, Shore-Härte 92 der Freudenberg AG durchgeführt. Das Material wird mit Schleifband Körnung 40 in Längsrichtung gerauht. Ein Tropfen der heißen Schmelze wird auf das eine Ende des Prüfkörpers aufgetragen, von Hand sofort das freie Ende des Prüfgummis auf die klebstoffhaltige Seite gedrückt und festgehalten. Gemessen wird anhand mehrerer Versuche die Zeit, nach welcher der Klebstoff die Rückstellkraft des Gummis kompensiert hatte, so daß die Klebung nicht mehr aufging.

*) Polyoxyalkylendiole oder Polyalkylenoxid-diole, (bisweilen auch als z.B. Polyalkylenglykole bezeichnet), werden durch Umsetzung von Alkylenoxiden (wie Ethylenoxid oder Propylenoxid) mit bifunktionellen Startern (Wasser oder Diole) nach altbekannten Methoden hergestellt.

4. Zugscherfestigkeit

2 Prüfkörper aus Nora-Gummi (80x20x3 mm) werden mit 10 mm Überlappung mit heiß aufgetragenem Prüfmaterial verklebt. Direkt danach werden je 5 Prüflinge mit Gewichten von 500 - 2500 g je 10 Min. belastet. Man beurteilt Festhalten bzw. Versagen der Klebung.

Tabelle 2

| Beispiel | Zugfestigkeit (MPa) | Zugscherf. (Raumtemperatur) | Abbindeverhalten (sec) | SV in (Pa.s), bei | | | |
|---|---|---|---|---|---|---|---|
| | | | | 190 | 200 | 210 | 220 °C |
| Vgl. 1 | 8,6 | 1) | 10 | >160 | 125 | 76 | 35 |
| 1 | 10,7 | 1) | 5 | - | 34 | 32 | 12 |
| 2[2)] | 8,1 | 1) | 10 | 20 | 10 | 9 | 9 |
| 3 | 9,3 | 1) | 5 | - | 10 | 10 | 10 |
| 4 | 10,4 | 1) | 5 | - | 18 | 18 | 12 |
| 5 | 10,7 | 1) | 5 | 14 | 10 | 6 | 4 |

1) bis 2500 g über 10′ fest
2) nicht extrahiert;
SV = Schmelzviskosität bei der angegebenen Temperatur

Die Beispiele zeigen, daß durch die erfindungsgemäß zu verwendenden Kettenabbrecher die Schmelzviskosität bei gleichbleibend guten oder sogar verbesserten klebetechnischen Eigenschaften deutlich verringert werden kann. Sogar ein nicht extrahiertes Produkt (Bsp. 2), erfindungsgemäß modifiziert, weist praktische gleiche Werte auf. Die erfindungsgemäß modifizierten PA sind daher eine wertvolle Ergänzung des Standes der Technik.

**Ansprüche**

1. Polyetheramid-Schmelzklebstoffe, die spezielle Polyetherdiole und mindestens 40 Gew.-% Caprolactam sowie weitere polyamidbildende Komponenten eingebaut enthalten, dadurch gekennzeichnet, daß bei der Synthese 0,1 - 4,0 Mol % (bezogen auf die polyetheramidbildenden Komponenten) Kettenabbrecher der allgemeinen Formel (I) im Reaktionsgemisch neben Polyetherdiolen sowie Caprolactam und weiteren polyamidbildenden Komponenten mitverwendet werden,
R - Y (I)
wobei
R einen gegebenenfalls verzweigten, gesättigten oder ungesättigten, gegebenenfalls substituierten Alkylrest mit einer Länge von ca. 12 bis ca. 40 C-Atomen und
Y eine gegenüber Lactamen und/oder Alkoholen und/oder Carbonsäuren sowie gegebenenfalls und/oder Aminen reaktive Gruppe bedeuten.

2) Polyetheramidschmelzklebstoffe nach Anspruch 1, dadurch gekennzeichnet, daß Y bevorzugt für eine der Gruppen (II)-(III)
$-NH_2$ (II)
-COOH (III)
steht und wobei die Carboxylgruppe (III) ganz besonders bevorzugt ist.

3. Polyetheramid-Schmelzklebstoffe nach Ansprüchen 1 und 2, dadurch gekennzeichnet, daß als Kettenabbrecher (I) einzeln oder im Gemisch, Verbindungen R-Y mit funktionellen Gruppen der Formeln (II)-(III) und mit im Mittel ca. 16 bis ca. 35 C-Atomen im Alkylrest R eingesetzt werden, wobei Stearinsäure, Stearylamin, Behensäure, Behenylamin, Hexadecylamin und Hexadecansäure.

4. Polyetheramid-Schmelzklebstoffe nach Ansprüchen 1 und 2, dadurch gekennzeichnet, daß 0,2 - 3,5 Mol-% und besonders bevorzugt 0,5 - 3,0 Mol-%, Kettenabbrecher der Formel (I) dem Reaktionsgemisch zugesetzt werden und anschließend in üblicher Weise polykondensiert wird.

5. Polyetheramid-Schmelzklebstoffe nach Ansprüchen 1 bis 4, dadurch gekennzeichnet, daß die erfindungsgemäßen Polyetheramide, neben Kettenabbrechern (I) der Formel R-Y hergestellt werden aus

1) 40-75 Gew.-% Caprolactam und/oder ε-Aminocapronsäure,
2) 25 - 60 Gew.-% eines Gemisches a) bis c) in den angegebenen Äquivalentverhältnissen, von
a) 0,95 bis 1,05 Äquivalenten, bevorzugt 1 Äquivalent, einer oder mehrerer aliphatischer und/oder aromatischer $C_4$-$C_{38}$-Dicarbonsäuren, bevorzugt Adipinsäure, Isophthalsäure, Terephtalsäure und Sebazinsäure,
b) 0,2 - 0,9 Äquivalenten eines oder mehrerer aliphatischer und/oder cycloaliphatischer $C_6$-$C_{25}$-Diamine, bevorzugt Hexamethylendiamin, Trimethylhexamethylendiamine, Isophorondiamin und Zweikerndiamine der Formel (V),

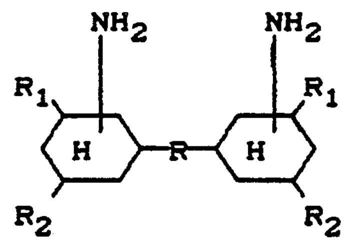

(V)

in der R z. B. ein Alkylen- oder Alkylidenrest mit 1 bis 10 C-Atomen und vorzugsweise ein $-CH_2$-Rest oder ein

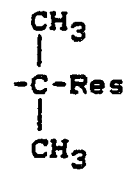

-Rest ist und

$R_1$ und $R_2$ gleich oder verschieden sind und H oder $C_1$-$C_3$-Alkyl bedeuten, vorzugsweise 4,4′-Diamino-3,3′-dimethyl-dicyclohexylmethan, 4,4′-Diamino-3,3′, 5,5′-tetramethyl-dicyclohexylmethan, 4,4′-Diamino-dicyclohexylpropan und vorzugsweise 4,4′-Diamino-dicylcohexylmethan und Diaminodicylohexylmethan-Isomerengemische, die zu mindestens 75 % aus dem 4,4′-Isomeren bestehen,
c) 0,1 - 0,8 Äquivalenten eines oder mehrerer Polyoxyalklendiole, z. B. Polyoxyethylendiole, Polyoxypropylendiole oder Ethylenoxid-Propylenoxid-Copolymer-Diole mit Molekulargewichten ( $\overline{M}_n$) von 200 - 1.000, wobei die OH-Endgruppen ganz oder teilweise durch primäre Amin-Endgruppen ersetzt sein können,
wobei die Summe der Äquivalenten b) + c) gleich 1 ist,
sowie gegebenenfalls
3) 0 bis 15 Gew.-% Lactamen und/oder Aminocarbonsäuren ungleich Caprolactam bzw. Aminocapronsäure, bevorzugt Laurinlactam und Aminoundekansäure,
mit der Maßgabe, daß im Fall der Verwendung von Dimerfettsäuren gemäß 2a) diese mindestens 95 Gew.-% dimere Fettsäuren enthalten sollen und daß Dimerfettsäuren gemäß 2a) zu maximal 15 Gew.-% enthalten sind.

6. Polyetheramidschmelzklebstoffe nach Ansprüchen 1 bis 5, dadurch gekennzeichnet, daß bevorzugte Polyetheramide hergestellt werden aus

1) 40 - 75 Gew.-% Caprolactam + gegebenenfalls geringe Mengen ε-Aminocapronsäure,

2) 25 - 60 Gew.-% eines Gemisches a) - c) in den angegebenen Äquivalentverhältnissen, aus

a) 1 Äquivalent einer Dicarbonsäure, ausgewählt aus Adipinsäure und/oder Sebazinsäure und/oder Isophthalsäure und/oder Terephthalsäure,

b) 0,5 - 0,9 Äquivalenten Hexamethylendiamin und/oder 4,4′-Diaminodicyclohexylmethan (bzw. oben charakterisierten Isomerengemischen, die auch noch ≦ 10 % höher kondensierte Anteile (z.B. Triamine) enthalten können,

c) 0,1 - 0,5 Äquivalenten an Polyoxyalkylendiolen mit einem Molekulargewicht ( $\overline{M}_n$) von 300 - 600 g $mol^{-1}$, wobei die Summe der Äquivalente b) + c) gleich 1 ist, und

3) 0,2 - 3,5 Mol-%, bezogen auf den Gesamtmolgehalt der polyetheramidbildenden Komponenten, an Monoaminen und/oder Monocarbonsäuren R-Y mit einem Kohlenstoffrest R von 16 - 35 C-Atomen gemäß Formel (I).

7. Polyetheramid-Schmelzklebstoffe nach Ansprüchen 1 bis 6, dadurch gekennzeichnet, daß Zusatzstoffe, gegebenenfalls in Form von Konzentraten in anderen Polymeren, anwesend sein können, z.B. Pigmente, Mattierungsmittel, nukleierende Zusätze, Stabilisatoren, Elastomermodifikatoren sowie Fließhilfen, wobei die

Zusatzstoffe je nach Typ vor, während oder nach der Polykondensation eingebracht werden können.

8. Polyetheramid-Schmelzklebstoffs nach Ansprüchen 1 bis 7, dadurch gekennzeichnet, daß sie Säurezahlen von 4 bis 20, relative Viskositäten (1 gew.-%ige Lösungen in m-Kresol bei 25° C) von 1,3 bis 2,5, Erweichungspunkte von 100 bis 200° C und Schmelzviskositäten von 0,5 bis 100 Pa.s bei 200° C besitzen.

9. Verfahren zur Herstellung, gegebenenfalls unter Verwendung üblicher Katalysatoren und Hilfsstoffe, von Polyetheramid-Schmelzklebstoffen aus polyamid bildenden Komponenten und Polyoxyalkylendiolen der Zusammensetzung nach Ansprüchen 1 - 8, durch Schmelzekondensation, dadurch gekennzeichnet, daß sie hergestellt werden aus

1) 40-75 Gew.-% Caprolactam und/oder $\epsilon$-Aminocapronsäure,

2) 25 - 60 Gew.-% eines Gemisches a) bis c) in den angegebenen Äquivalentverhältnissen, von

a) 0,95 bis 1,05 Äquivalenten, bevorzugt 1 Äquivalent, einer oder mehrerer aliphatischer und/oder aromatischer $C_4$-$C_{38}$-Dicarbonsäuren, bevorzugt Adipinsäure, Isophthalsäure, Terephtalsäure und Sebazinsäure,

b) 0,2 - 0,9 Äquivalenten eines oder mehrerer aliphatischer und/oder cycloaliphatischer $C_6$-$C_{25}$-Diamine, bevorzugt Hexamethylendiamin, Trimethylhexamethylendiamine, Isophorondiamin und Zweikerndiamine der Formel (V),

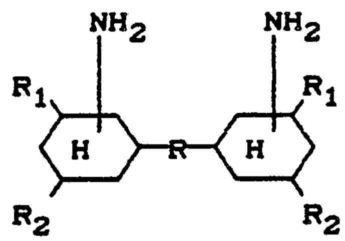

(V)

in der R z. B. ein Alkylen- oder Alkylidenrest mit 1 bis 10 C-Atomen und vorzugsweise ein $-CH_2$-Rest oder ein

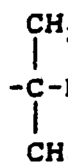
-Rest ist und

$R_1$ und $R_2$ gleich oder verschieden sind und H oder $C_1$-$C_3$-Alkyl bedeuten, vorzugsweise 4,4′-Diamino-3,3′-dimethyl-dicyclohexylmethan, 4,4′-Diamino-3,3′, 5,5′-tetramethyl-dicyclohexylmethan, 4,4′-Diamino-dicyclohexylpropan und vorzugsweise 4,4′-Diamino-dicylcohexylmethan und Diaminodicylohexylmethan-Isomerengemische, die zu mindestens 75 % aus dem 4,4′-Isomeren bestehen,

c) 0,1 - 0,8 Äquivalenten eines oder mehrerer Polyoxyalkylendiole, z. B. Polyoxyethylendiole, Polyoxypropylendiole oder Ethylenoxid-Propylenoxid-Copolymer-Diole mit Molekulargewichten ( $\overline{M}_n$) von 200 - 1.000, wobei die OH-Endgruppen ganz oder teilweise durch primäre Amin-Endgruppen ersetzt sein können,
wobei die Summe der Äquivalente von b) + c) gleich 1 ist
sowie gegebenenfalls

3) 0 bis 15 Gew.-% Lactamen und/oder Aminocarbonsäuren ungleich Caprolactam bzw. Aminocapronsäure, bevorzugt Laurinlactam und Aminoundekansäure,
sowie

4) 0,1 - 4,0 Mol-%, bezogen auf die Gesamtmolzahl polyetheramidbildender Komponenten, Kettenabbrecher der Formel I

R - Y (I)

wobei

R einen gegebenenfalls verzweigten, gesättigten oder ungesättigten, gegebenenfalls substituierten Alkylrest mit einer Länge von ca. 12 bis c.a 40 C-Atomen und

Y eine gegenüber Lactamen und/oder Alkoholen und/oder Carbonsäuren sowie gegebenenfalls und/oder Aminen reaktive Gruppe bedeuten,

mit der Maßgabe, daß Dimerfettsäuren gemäß 2a) mindestens 95 Gew.-% dimere Fettsäuren enthalten

sollen und daß Dimerfettsäuren gemäß 2a) zu maximal 15 Gew.-% enthalten sind.

10. Verwendung der Polyetheramide nach Ansprüchen 1-8 als Schmelzklebstoffe sowie als Additive für Thermoplaste.